**Europäisches Patentamt**

(19) **European Patent Office**

**Office européen des brevets**

(11) Numéro de publication: **0 140 754**
**B1**

(12) **FASCICULE DE BREVET EUROPÉEN**

(45) Date de publication du fascicule du brevet:
14.01.87

(21) Numéro de dépôt: 84401900.0

(22) Date de dépôt: 24.09.84

(51) Int. Cl.⁴: **B 60 Q 1/14**

(54) **Commutateur électrique perfectionné commandé par un levier pivotant, en particulier pour véhicules automobiles.**

(30) Priorité: 26.09.83 FR 8315248

(43) Date de publication de la demande:
08.05.85 Bulletin 85/19

(45) Mention de la délivrance du brevet:
14.01.87 Bulletin 87/3

(84) Etats contractants désignés:
**DE GB IT**

(56) Documents cité:
**FR-A-1 432 008**

(73) Titulaire: **JAEGER, 2, rue Baudin, F-92303 Levallois-Perret (FR)**

(72) Inventeur: **Clerin, Michel Paul, 29, Place des Erables, F-78260 Acheres (FR)**

(74) Mandataire: **Martin, Jean- Jacques, Cabinet REGIMBEAU 26, Avenue Kléber, F-75116 Paris (FR)**

EP 0 140 754 B1

## Description

La présente invention concerne le domaine des commutateurs élecriques

La présente invention concerne plus précisément un commutateur électrique, en particulier pour véhicules automobiles, commandé par un levier allongé pivotant susceptible de basculer autour d'un axe transversal à son axe longitudinal, sous l'effet d'un actionnement manuel, en vue d'opérer un effet de commutation.

De nombreux commutateurs de ce type ont déjà été proposés, notamment dans le cadre d'applications aux véhicules automobiles.

De tels commutateurs utilisant des leviers pivotants sont par exemple décrits dans les brevets français publiés sous les N° 2 395 585, N° 2 395 586 N° 2 395 567 et N° 1432 008.

La présente invention vient maintenant proposer un commutateur perfectionné commandé par un levier pivotant qui présente plusieurs positions instables et permet une action impulsionnelle sur des couples de contacts électriques ouverts ou fermés en position de repos, afin de modifier l'état desdits couples de contact lors d'un actionnement manuel du levier de commande.

Un but important de la présente invention est de proposer un commutateur comportant des moyens de guidage en pivotement du levier de commande et de rappel de celui-ci, plus simples que ceux utilisés dans les réalisations antérieures, de telle sorte que le commutateur conforme à la présente invention soit plus robuste et économique.

Un autre but important de la présente invention est de proposer un commutateur à levier pivotant qui puisse être utilisé dans de nombreuses applications et qui en particulier puisse faire l'objet de façon simple et rapide de diverses adaptations, tant en ce qui concerne le nombre de directions de pivotement autorisé pour le levier de commande, que le type des couples de contacts électriques incorporés au commutateur.

Pour cela, la Demanderesse propose de disposer la quasi totalité des moyens de guidage du levier sur celui-ci, à la différence de l'art antérieur selon lequel les formes destinées au guidage ou à l'indexage du levier étaient généralement disposées sur le boîtier des commutateurs.

Par rapport au FR-A- 1 432 008 qui propse un commutateur électrique, en particulair pour véhicule automobile, du type comportant un boîtier creux présentant une ouverture dans l'une première de ses parois et un levier de commande muni d'un tourillon transversal à son axe longtudinal, pénétrant dans le boîtier par ladite ouverture, porté à pivotement sur le boîtier, et adapté pour modifier l'état de couples de contacts électriques logés dans le boîtier, lors de son déplacement, la présente invention est caractérisée par le fait que:

- le tourillon repose contre la surface interne de la première paroi du boîtier, ledit levier étant engagé au niveau de son extrémité interne au boîtier dans

- un poussoir en forme de douille présentant au niveau de sa face opposée au levier,

. d'une part une incurvation centrale,

. d'autre part quatre saillies régulièrement réparties angulairement sur la périphérie de l'incurvation, ledit poussoir étant sollicité en éloignement du levier par

- un organe élastique intercalé entre le poussoir et le tourillon, de telle sorte que le poussoir repose contre

- une seconde paroi du boîtier, opposée à la première, qui présente sur sa face interne un ergot engagé en position de repos dans l'incurvation du poussoir et de largeur inférieure à l'écartement existant entre deux saillies adjacentes du poussoir, tandis que

- les contacts électriques sont supportés à l'intérieur du boîtier au voisinage de la périphérie du poussoir de telle sorte que leur état soit modifié lors d'un déplacement du poussoir induit par le pivotement du levier de commande.

D'autres avantages et caractéristiques de la présente invention apparaîtront à la lecture de la description détaillée qui va suivre et en regard des dessins annexés donnés à titre d'exemple non limitatif sur lesquels:

- la figure 1 représente une vue de dessus d'un commutateur conforme à la présente invention selon une vue schématiquement représentée par la flèche référencée I sur la figure 2, le couvercle du boîtier étant enlevé, et le commutateur étant au repos,

- la figure 2 représente une vue en coupe longitudinale d'un commutateur conforme à la présente invention selon un plan de coupe référencé II-II sur la figure 1,

- la figure 3 représente une vue en coupe transversale d'un commutateur conforme à la présente invention selon des plans de coupe référencés III-III sur la figure 1,

- la figure 4 représente une vue en coupe transversale d'un commutateur conforme à la présente invention selon un plan de coupe référencé IV-IV sur la figure 1,

- la figure 5 représente une vue de face axiale d'un poussoir utilisé dans un commutateur conforme à la présente invention selon un angle de vue schématiquement référencé par la flèche V sur la figure 1,

- la figure 6 représente une variante de réalisation d'un commutateur conforme à la présente invention selon un plan de coupe schématiquement illustré VI-VI sur la figure 1,

- la figure 7 représente une vue de face axiale d'un poussoir utilisé dans un commutateur conforme au mode de réalisation représenté sur la figure 6 selon un angle de vue similaire à celui de la figure 5,

- la figure 8 représente une vue en coupe longitudinale du poussoir représenté sur la figure 7, selon un plan de coupe longitudinal identique au plan de coupe II-II représenté sur la figure 1,

- les figures 9a à 9e représentent schématiquement différentes variantes de poussoir conformes à la présente invention,

- les figures 10a à 10c représentent différents types de paires de contacts utilisés dans des commutateurs conformes à l'invention.

Il apparaît à l'examen des figures que les éléments constituant le commutateur électrique conforme à la présente invention présentent, en particulier en ce qui concerne le boîtier, une géométrie fort complexe, la grande majorité des formes de ces éléments qui pour la plupart d'ailleurs coopèrent entre elles, ayant pour but soit de supporter, soit de protéger des éléments associés. De ce fait, un grand nombre des formes représentées sur les figures doivent être respectées afin d'obtenir un fonctionnement satisfaisant du commutateur. Pour ces raisons, les dessins annexés doivent être considérés comme intégrés à la présente description par la référence qui leur est faite ici, afin de suppléer le cas échéant le silence de la description, afin de définir lesdites formes géométriques des éléments du commutateur.

D'une façon générale, celui-ci se compose d'un boîtier 100 formé de deux parties, 110 et 150 assemblées entre elles, qui logent un poussoir 10 sollicité par un levier de commande 50 afin de modifier en conséquence l'état de couples de contacts électriques référencés 200 d'une façon générale.

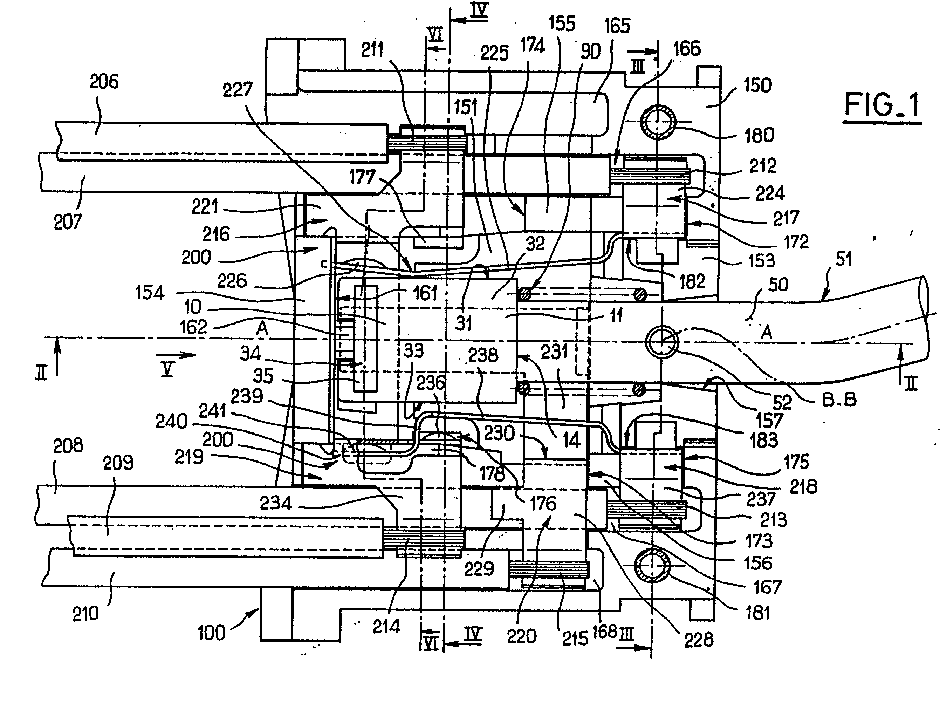

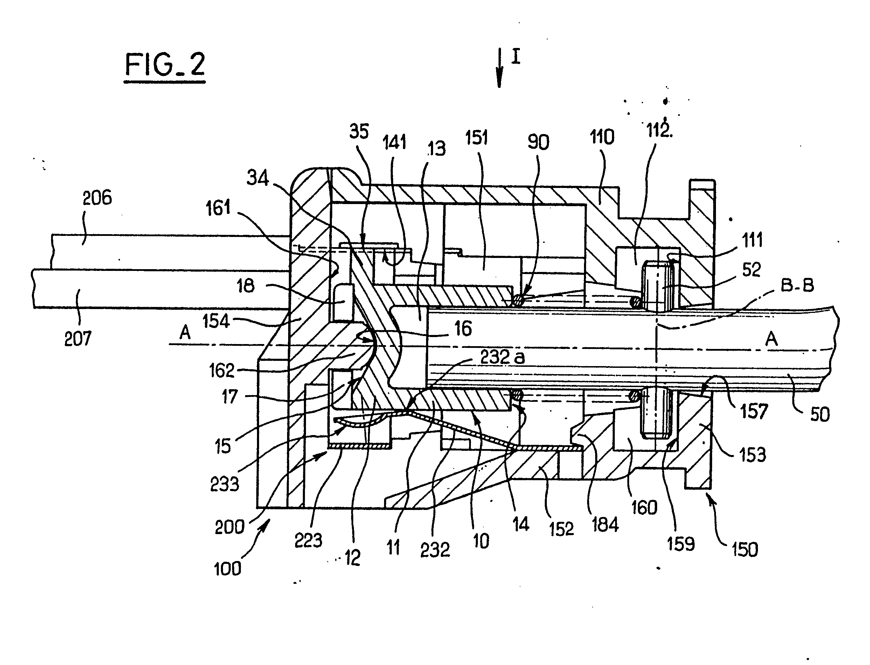

Comme cela est représenté en particulier sur les figures 1 et 2, le boîtier 100 se compose d'un couvercle 110 recouvrant un corps creux 150 délimitant un logement principal 151 destiné à recevoir notamment le poussoir 10 et les couples de contacts électriques 200 précités en autorisant un déplacement du poussoir 10.

Le corps 150 est constitué d'une façon générale d'une paroi de fond 152 prolongée sur sa périphérie d'une première paroi 153 qui sera dite paroi arrière par la suite de la description afin de clarifier celleci, d'une seconde paroi 154 opposée à la première et généralement parallèle à celle-ci, qui sera dite paroi avant dans la suite de la description afin de clarifier celle-ci, et enfin de deux parois latérales 155 et 156 généralement parallèles entre elles et opposées, intercalées entre les parois 153 et 154 précitées. La totalité de ces parois 153 à 156 s'étend généralement perpendiculairement à la paroi de fond 152 d'un côté de celle-ci.

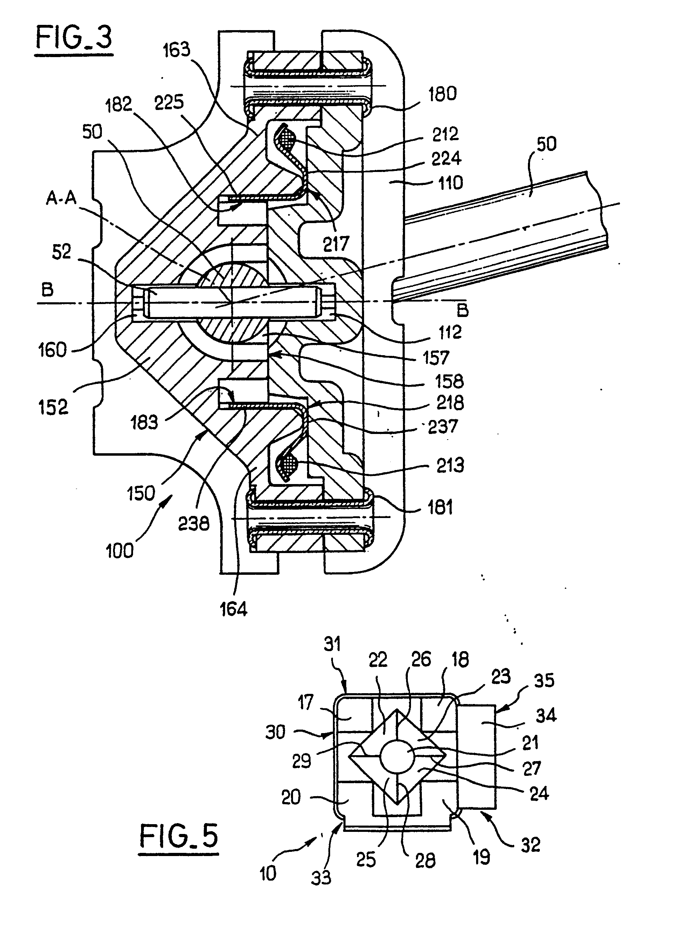

La paroi arrière 153 en coopération avec le couvercle 110 délimite une ouverture 157 autorisant la pénétration du levier 50 dans le logement 151 du boîtier. Dans la pratique, ladite ouverture 157 est formée d'un évidement débouchant au niveau du bord libre supérieur 156 de la paroi 157, comme cela est en particulier représenté sur la figure 3, cette ouverture 157 étant refermée autour du levier de commande 50 lors de l'assemblage du couvercle 110 sur le corps 150. Plus précisément, comme cela est représenté notamment sur la figure 3, le fond de l'ouverture 157 est complémentaire du levier sur un secteur angulaire de l'ordre de 180°.

Selon le mode de réalisation représenté sur les figures le levier de commande 50 est formé d'une tige allongée rigide, de section droite cylindrique dont l'axe longitudinal est référencé A-A sur les figures.

L'une des extrémités du levier de commande 50 est engagée dans le logement 151, par l'ouverture 157 complémentaire comme cela est représenté sur les figures 1 et 3.

Si nécessaire, en fonction de chaque application particulière, l'extrémité du levier de commande 50 située à l'extérieur du boîtier 100, et sur laquelle agit un opérateur afin de solliciter une commutation, pourra être incurvée comme représentée en 51 sur la figure 1 et revêtue le cas échéant de diverses indications facilitant les manipulations à l'opérateur en schématisant les effets de la commutation induits par une action donnée sur le levier de commande 50.

Dans un tel cas l'axe longitudinal A-A précité du levier est pris en référence à la section de celui-ci interne au boîtier.

Au repos, comme représenté sur la figure 1, l'extrémité du levier 50 introduite dans le logement 151 s'étend sensiblement perpendiculairement aux parois arrière 153 et avant 154 du boîtier.

Le levier de commande 50 présente un alésage transversal à son axe A-A longitudinal, qui reçoit un tourillon 52 transversal reposant contre la surface interne 159 de la paroi arrière 153 et contre une surface 111 coplanaire du couvercle 110. Dans cette position, le tourillon 52 d'axe B-B s'étend sensiblement perpendiculairement à la paroi de fond 152.

Comme cela est représenté sur la figure 2, les extrémités du tourillon 52 sont logées respectivement dans une chambre 160 du corps 150 et une chambre 112 du couvercle 110. Ces dernières présentent des dimensions bien supérieures au diamètre du tourillon 52 afin d'autoriser non seulement un pivotement du levier de commande 50 autour de l'axe B-B du tourillon, c'est-à-dire un basculement dans un plan contenu dans le plan de la figure 1 et perpendiculaire au plan de la figure 2, mais également autour d'axes perpendiculaires à l'axe B-B du tourillon, déterminés par les points de contact des extrémités du tourillon 52 sur les faces 159 et 111 précitées, c'est-à-dire un basculement perpendiculaire à celui précité, s'étendant dans un plan perpendiculaire au plan de la figure 1 et parallèlement au plan de la figure 2.

Les directions de basculement du levier de commande 50 sont déterminées par l'action de l'opérateur et conditionnées par la forme du poussoir 10 comme cela sera décrit plus en détail par la suite.

L'extrémité du levier 50 contenu dans le logement 151 est insérée dans un poussoir 10 en forme de douille. Ce dernier repose contre la paroi avant 154 comme cela est représenté notamment sur les figures 1 et 2.

Le poussoir 10 est formé comme cela est représenté notamment sur les figures 1, 2 et 8 d'une chemise 11 délimitée par une enveloppe de forme générale parallélépipédique rectangle fermée à son extrémité adjacente à la paroi avant 154 par une paroi transversale 12. La chemise 11 détermine un alésage central cylindrique borgne 13 complémentaire du levier de commande 50 et recevant celui-ci.

Le poussoir 10 et le levier de commande 50 sont sollicités en éloignement l'un de l'autre grâce à un ressort hélicoïdal de compression 90. Ce dernier vient en appui, d'une part contre la surface radiale 14 de la chemise dirigée vers la paroi arrière 153, d'autre part contre le tourillon 52, de telle sorte que le poussoir 10 et le tourillon 52 soient sollicités en appui respectivement contre la paroi avant 154 et contre la paroi arrière 153.

L'engagement du levier de commande 50 dans le poussoir 10 est tel que ce dernier soit constamment coaxial au levier de commande 50.

Par ailleurs, selon une caractéristique importante de la présente invention, comme cela est représenté en particulier sur les figures 1 et 2, la paroi avant du boîtier présente sur sa face interne 161 un ergot 162, en regard de l'ouverture 157 précitée.

En outre, la paroi transversale 12 du poussoir 10 présente sur sa face 15 opposée au levier, et dirigée vers la paroi avant 154, d'une part une incurvation centrale 16, d'autre part quatre saillies référencées 17, 18, 19 et 20 sur les figures, régulièrement réparties sur la périphérie de l'incurvation 16.

L'ergot 162 présente des dimensions transversales prises perpendiculairement à l'axe longitudinal A-A du levier de commande au repos, selon deux plans perpendiculaires entre eux, inférieures à l'écartement existant entre deux saillies 17 à 20 adjacentes du poussoir, plus précisément, les deux plans précités dans lesquels la dimension transversale de l'ergot 162 est mesurée sont déterminés l'un par l'axe A-A longitudinal du levier au repos et l'axe B-B (plan parallèle au plan de la figure 2) et l'autre par ce même axe A-A longitudinal au repos et un axe perpendiculaire à l'axe B-B du tourillon (plan perpendiculaire au plan de la figure 2).

Selon un mode de réalisation préférentiel, l'ergot 162 présente une section droite (selon un plan parallèle à la paroi avant 154) de forme carrée la largeur de ce carré étant légèrement inférieure à l'écartement existant entre deux saillies 17 à 20 adjacentes. Par ailleurs, l'extrémité de l'ergot 162 dirigé vers la paroi arrière 153 présente une forme générale convexe, par exemple généralement sphérique. Dans un tel cas, l'ergot 162 étant destiné à passer relativement entre deux saillies adjacentes 17 à 20 lors du pivotement du levier 50, les arêtes de cet ergot 162 sont de préférence tronquées ou arrondies afin de faciliter un tel passage.

On comprend à l'examen des figures, et en particulier des figures 1 et 2 que la disposition qui vient d'être décrite impose deux plans de pivotement pour le levier de commande 50 et le poussoir 10, ces plans de pivotement correspondant respectivement à un plan confondu avec le plan de la figure 2 et à un plan perpendiculaire à celui-ci.

Toute tentative de pivotement du levier 50 dans un plan différent est interdite par butée de l'une des saillies 17 à 20 contre l'ergot 162.

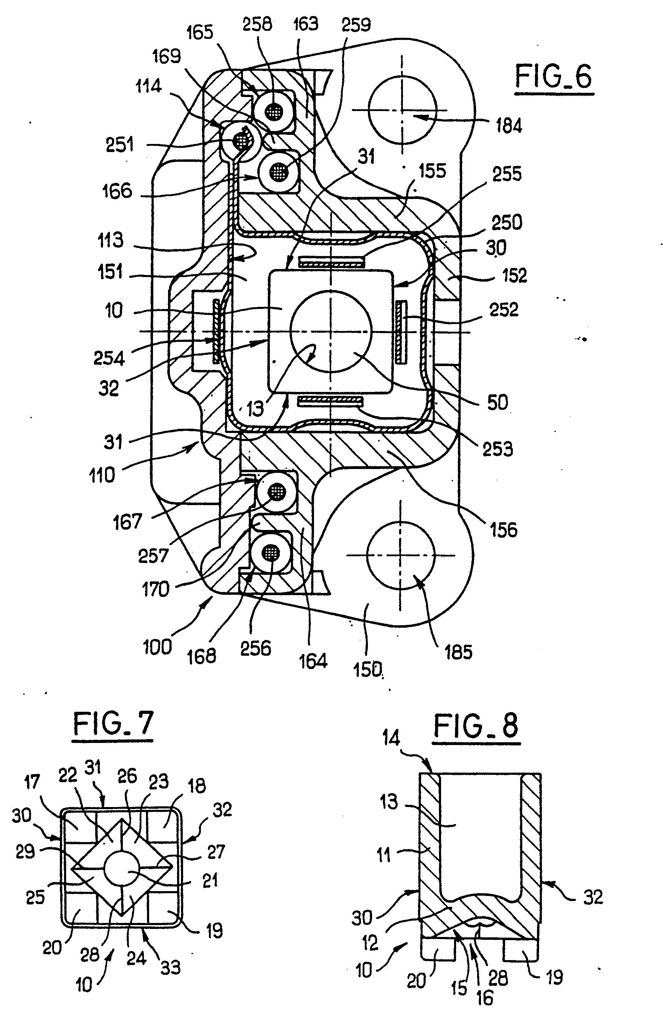

D'autre part, comme cela est représenté en particulier sur les figures 5 et 7, la forme de l'incurvation 16 prévue dans le poussoir 10 est de préférence adaptée afin de guider l'ergot 162 vers l'une des voies de passage déterminée entre les saillies 17 à 20.

Pour cela, selon le mode de réalisation représenté sur les figures 5 à 7, l'incurvation centrale 16 se compose d'un évidement central 21 concave, par exemple semi-sphérique, complété par quatre plans 22 à 25 inclinés vers le centre de l'évidement 21 en direction de la surface radiale 14 précitée. Ainsi l'incurvation 16 présente une forme générale pyramidale dont les arêtes 26 à 29 (correspondant aux intersections des plans 22 à 25) sont orientées dans l'axe des passages déterminés entre les saillies 17 à 20 et facilitent le passage de l'ergot 162 entre ceux-ci.

L'homme de l'art appréciera que de ce fait lorsque l'opérateur agit sur le levier de commande 50 afin de solliciter un déplacement de celui-ci dans un plan perpendiculaire au plan de la figure 2 (autour de l'axe B-B) ou dans le plan de la figure 2 (autour d'un axe perpendiculaire au plan de la figure 2), le poussoir 10 glisse contre la surface extrême de l'ergot 162, ce qui induit une légère compression du ressort 90. Au cours de ce déplacement, l'une des arêtes 26 à 29 de l'incurvation 16 (déterminée par la direction de déplacement imposée par l'opérateur) guide le poussoir sur l'ergot 162.

Le retour en position de repos est sollicité par le ressort 90 des que l'opérateur relache le levier 50.

Par ailleurs, comme cela est représenté sur les figures, les contacts électriques référencés d'une façon générale 200 sont supportés à l'intérieur du boîtier 100 au voisinage de la périphérie du poussoir 10 et plus précisément des faces latérales 30 à 33 de celui-ci, de telle sorte que leur état soit modifié lors d'un déplacement du poussoir 10 induit par le pivotement du levier de commande 50.

De préférence, chaque coude de contacts électriques 200 comprend un contact fixe et un contact mobile lors du pivotement du levier, constitué, d'une lamelle électriquement conductrice souple et élastique. Lesdites lamelles électriquement conductrices sont avantageusement immobilisées à l'intérieur du boîtier 100 par insertion dans des logements prévus dans les faces internes du boîtier, qui seront décrits plus en détail par la suite.

Plus précisément, au repos, une portion des lamelles formant un contact mobile s'étend sensiblement parallèlement à une face latérale correspondante 30 à 33 du poussoir, et se trouve déplacée en appui ou hors d'appui contre un contact fixe correspondant, lors du pivotement du levier de commande 50.

On peut ainsi prévoir par exemple quatre paires de contacts électriques 200 à raison d'une paire en regard de chacune des faces 30 à 33 du poussoir 10, comme cela est représenté sur la figure 6. Toutefois, lorsque le commutateur doit comporter un nombre de paires de contacts inférieur, il est avantageux, afin de faciliter la manipulation, d'interdire un déplacement en pivotement du levier de commande 50 dans la direction correspondante.

Pour ce faire, comme cela est représenté sur les figures 1 à 4, le poussoir est muni sur celles de ses faces latérales correspondantes 30 à 33, du côté desquelles il convient d'interdire les pivotements du poussoir 10, et au voisinage de la paroi transversale 12, de protubérances 34 déterminant une face 35 plane destinée à venir en appui contre le boîtier (en l'espèce la surface inférieure du couvercle 110) afin d'interdire un pivotement du levier de commande dans cette direction.

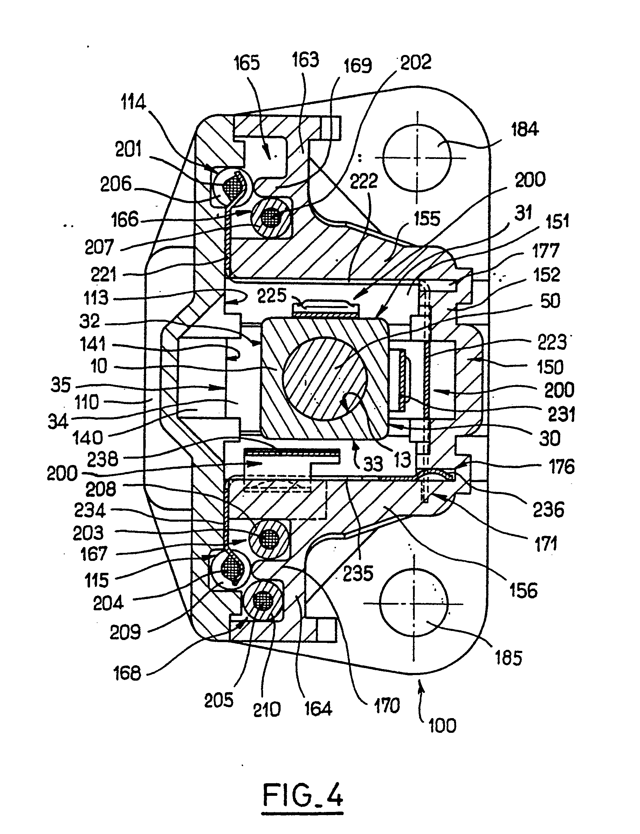

Et si cela est nécessaire, des inserts 140 (figure 4) peuvent être rapportés sur le boîtier (couvercle. 110 ou corps 150) afin de déterminer une surface plane d'appui pour les protubérances 34.

Sur la figure 4 on reconnaît ainsi un insert 140 dont la surface 141 dirigée vers l'intérieur du logement 151 est située dans le prolongement de la surface inférieure 113 (côté logement) du couvercle 110.

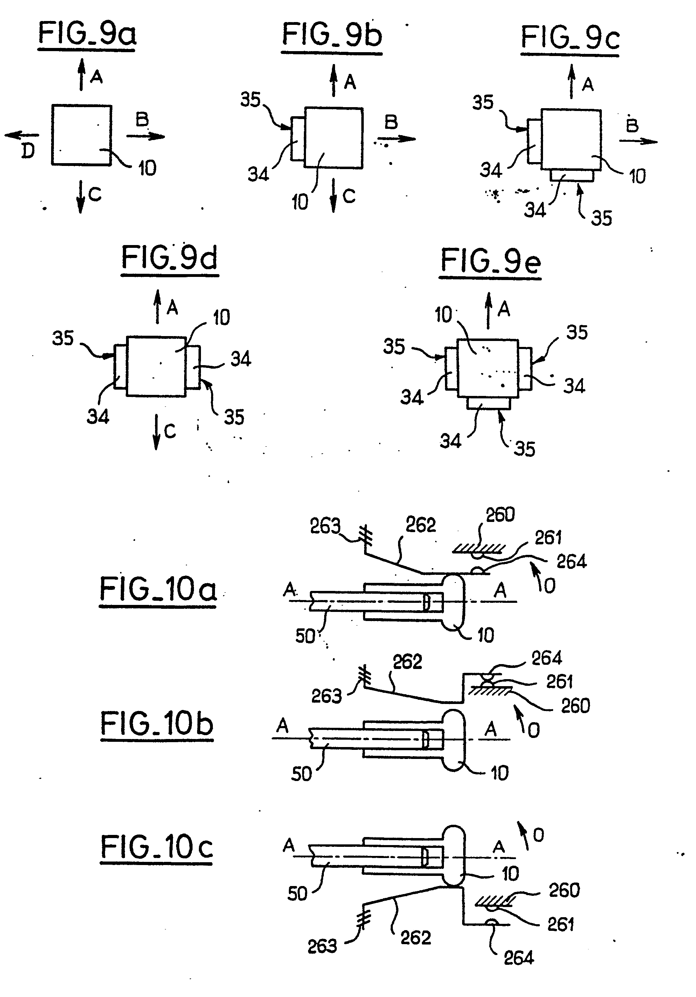

Ces dispositions seront décrites plus en détail par la suite en regard des figures 9a à 9e.

On va maintenant décrire plus en détail le mode de réalisation représenté sur les figures 1 à 4.

Les parois latérales 155 et 156 du boîtier 150 sont munies, au niveau de leur bord libre adjacent au couvercle 110, de nervures en saillie vers l'extérieur désignées d'une façon générale par les références 163 et 164, qui délimitent une pluralité de canaux 165 à 166 de section droite généralement quadrangulaire s'étendant parallèlement à l'axe A-A du levier au repos et ouverts en direction du couvercle 110.

Selon le mode de réalisation représenté sur la figure 4, chacune des nervures 163 et 164 délimite ainsi deux canaux séparés entre eux par un voile 169, 170. Le couvercle 110 présente en regard de chacun de ces voiles 169 et 170 un canal 114, 115 respectivement parallèle aux canaux précités. Lesdits canaux 165 à 168 ainsi que 114 et 115 sont destinés à recevoir des éléments électriquement conducteurs reliant les contacts électriques 200 précités, l'installation, et sortant du boîtier à cet effet, à l'opposé du levier 50.

On reconnaît ainsi sur la figure 4 cinq éléments conducteurs vus en section droite, pour lesquels les âmes électriquement conductrices sont référencées respectivement 201 à 205 tandis que leurs enrobages électriquement isolants sont référencés 206 à 210.

Ces éléments électriquement conducteurs sont respectivement logés dans les canaux 114, 166, 167, 115 et 168. Les extrémités dénudées des éléments électriquement conducteurs référencées sur la figure 1, 211 à 215, sont soudées ou reliées à l'aide de tout autre moyen équivalent à des lamelles métalliques électriquement conductrices référencées respectivement 216 à 220 et qui forment les contacts électriques 200 précités.

La lamelle 216 reliée au conducteur 211 possède une première section 221, généralement parallèle au fond 152 et pincée lors de l'assemblage entre le couvercle 110 et le corps 150, comme représenté sur la figure 4, pour être maintenue en position, une seconde section 222 adjacente à la paroi avant 154 et reposant contre la surface interne de la paroi latérale 155, généralement perpendiculairement au fond 152, ainsi qu'une troisième section 223 généralement parallèle à ce dernier, et reposant contre celui-ci, en position adjacente à la paroi avant 154. Afin d'être mobilisée dans le boîtier, la première section 221 est introduite dans un logement de largeur correspondante prévue dans le couvercle 110 tandis que l'extrémité libre de la troisième section 223 est introduite dans un logement schématiquement référencé 171 sur la figure 4 ménagé dans la paroi latérale 156 parallèlement du fond 152.

Bien entendu, un logement symétrique au logement 171 est prévu dans la paroi latérale 155 du boîtier.

Les sections 222 et 223 disposées respectivement en regard des parois 31 et 30 du poussoir forment des contacts fixes contre lesquels sont portées en appui les lamelles 217 et 220 lors du déplacement en pivotement du levier de commande 50 dans la direction respective de ces lamelles (vers la paroi latérale 155 et vers le fond 152) comme cela sera explicité par la suite.

La lamelle 217 reliée au conducteur 212 possède une première section 224 reposant contre le bord libre supérieur de la paroi latérale 155, à proximité de la paroi arrière 153 et d'une seconde section 225 s'étendant à l'intérieur du logement 151, et généralement parallèlement à la paroi latérale 155, en direction de la paroi avant 154. A proximité de son extrémité libre, la lamelle 225 est munie d'un bosselage 226 en saillie vers la paroi latérale 155. Ce bosselage 226, comme le reste de la lamelle 217, est éloigné de la lamelle 216 au repos, toutefois, ce bosselage 226 est destiné à venir en contact contre la section 222 de la lamelle 216, par déformation élastique de la section 225, lors d'un pivotement du poussoir 10 vers la paroi latérale 155, afin de fermer la paire de contacts 200 ainsi composée.

La section 225 est de préférence coudée en 227 afin de reposer en permanence contre le poussoir 10.

Plus précisément, afin d'être immobilisée en position à l'intérieur du boîtier, la première section 24 est immobilisée dans un logement 172 prévu sur le bord libre supérieur de la paroi 155 parallèle au fond 152. La section 224 est ainsi pincée entre le fond du logement 172 et le couvercle 110 à l'assemblage. La zone de la seconde section 225 adjacente à la première est de même enfermée dans une rainure 162 parallèle à la paroi latérale 155 et ouverte en direction du couvercle 110, les profondeur et largeur de la rainure correspondant aux largeur et épaisseur des lamelles.

La lamelle 220 possède une première section 226 reliée au conducteur 215 et reposant contre le bord libre supérieur de la paroi latérale 156. Cette première section 226 est introduite dans un logement 173 ménagé dans le bord libre supérieur de la paroi 156 de telle sorte que cette lamelle soit immobilisée dans le boîtier et pincée entre le fond de ce logement et le couvercle 110, lors de l'assemblage, une saillie 229 prévue sur la section 226 venant par ailleurs en butée contre la paroi latérale 156.

Un logement 174 symétrique du logement 173 précité est ménagé dans le bord libre supérieur de la paroi latérale 155. De même, un logement 175 symétrique du logement 172 précité est ménagé dans le bord libre supérieur de la paroi latérale 156 au voisinage de la paroi arrière 153, les logements 173 et 174 étant ménagés à l'opposé de la paroi arrière 153 par rapport aux logements 172 et 175.

De plus une rainure 183 symétrique de la rainure 182 précitée par rapport à l'axe A-A est prévue.

En outre, la lamelle 220 présente une seconde section 230 s'étendant vers le fond 152 contre la surface interne de la paroi latérale 156, une troisième section 231 reposant contre le fond 150 parallèlement aux parois avant et arrière 153 et 154, jusqu'à la partie médiane du fond 152, et enfin une section 232 perpendiculaire à la section 231 et s'étendant vers la paroi avant 154.

L'extrémité de la section 232 adjacente à la section 231 est immobilisée à l'aide d'une saillie 184 prévue sur la paroi arrière 153, parallèlement au fond 152 et vers la paroi avant 154.

L'extrémité libre de cette section 232 en appui en 232a contre le poussoir 10 est munie d'un bosselage 233 réalisé par emboutissage, éloigné au repos de la section 223 mais destiné à venir en contact contre la section 223 conductrice précitée lors du déplacement du poussoir 10 en direction du fond 152 par déformation élastique de la section 231, afin de fermer la paire de contacts électriquement conducteurs ainsi formée.

La lamelle 219 reliée à l'élément électriquement conducteur 214 présente une première section 234 soudée dudit élément 214, et reposant contre le bord libre supérieur de la paroi latérale 156, ainsi que d'une seconde section 235 reposant en position adjacente à la paroi avant 154 contre la surface interne de la paroi latérale 156, en direction du fond 152. A ce niveau, l'extrémité libre 236 de la lamelle 220 est introduite dans un logement 176 (figure 4) ménagé dans le fond 154, perpendiculairement à celui-ci et dans le prolongement de la surface interne de la paroi latérale 156. En outre, de façon similaire à la section 221 précitée, la section 234 est introduite dans un logement complémentaire prévu dans le couvercle 110 de telle sorte que la lamelle 219 soit correctement immobilisée en position dans le boîtier afin de constituer un contact fixe avec lequel coopère la lamelle 218. Par ailleurs un second logement 177 symétrique du logement 176 précité est également prévu dans le fond 152 afin de recevoir de façon similaire une lamelle électriquement conductrice, si nécessaire.

A la différence des paires de contacts 216 et 217 d'une part 216 et 220 d'autre part qui constituent des paires de contacts ouvertes au repos et fermées lors d'un actionnement, la paire de contacts 219/218 constitue une paire de contacts fermée au repos et ouverte lors d'un actionnement.

Pour ce faire, la lamelle électriquement conductrice 218 présente une première section 237 introduite dans le logement 175 précité et d'une seconde section 238 s'étendant sensiblement parallèlement à la paroi latérale 156, sur l'intérieur de celle-ci, en direction de la paroi avant 154 et engagée dans la rainure 183.

Plus précisément, comme cela est représenté sur la figure 1, la section 238 est légèrement inclinée vers le centre du logement 151 en direction de la paroi avant 154 et présente à proximité de celle-ci un double pliage de telle sorte qu'une portion intermédiaire 239 s'étende sensiblement perpendiculairement à la paroi latérale 156 en direction de celle-ci et une portion extrême 240 s'étende sensiblement parallèlement à la paroi latérale 156 en direction de la paroi avant 154. Cette portion extrême 240 est ainsi disposée entre la section 235 précitée et la paroi latérale 156 ou plus précisément le fond d'une chambre 178 ménagée dans celle-ci. Bien entendu, une chambre symétrique de la chambre 178 est également ménagée dans la paroi latérale 155.

Par ailleurs, la portion extrême 240 est munie d'une protubérance 241 réalisée par emboutissage, en saillie vers l'intérieur du logement 151 et reposant contre la surface externe de la section 235 au repos.

Lors d'un basculement en pivotement du levier 50 en direction de la paroi latérale 156, le poussoir vient en appui contre la section 238 et par déformation élastique de la lamelle 219 écarte le bosselage 241 de la section 235 afin d'ouvrir la paire de contacts électriquement conducteurs ainsi formée.

Bien entendu, la présente invention est susceptible d'être l'objet de nombreuses variantes de réalisation.

Ainsi par exemple, comme cela est représenté sur la figure 6, on peut prévoir quatre paires de contacts électriquement conducteurs à l'intérieur du boîtier.

Plus précisément, comme cela est représenté sur la figure 6, on peut par exemple prévoir une première lamelle électriquement conductrice 250 reliée à un élément électriquement conducteur 251 et qui entoure le poussoir 10 sur toute la périphérie de celui-ci en reposant contre les surfaces internes du couvercle 110, des faces latérales 155 et 156 et du fond 152. Cette lamelle 250 coopère d'autre part avec quatre lamelles électriquement conductrices 252 à 255 reliées respectivement à des éléments conducteurs référencés 256 à 259 accessibles à l'extérieur du boîtier. Les trois paires de contacts 250/252, 250/253 et 250/255 constituent des paires de contacts ouvertes au repos et fermées lors de l'actionnement et similaires aux paires 216/217 et 216/220 précitées, tandis que la paire de contacts 250/254 constitue une paire de contacts fermée au repos et ouverte lors de l'actionnement et similaire à la paire 219/218 précitée.

Le mode de réalisation représenté sur la figure 6 est par ailleurs très proche de celui précédemment évoqué et ne sera donc pas décrit dans le détail par la suite. Les éléments similaires à ceux décrits en regard des figures 1 à 5 portent des références identiques. On notera toutefois que comme cela est représenté sur la figure 7 et comme cela est schématiquement représenté sur la figure 9a, dans un tel cas, puisque l'on souhaite obtenir quatre directions de déplacement schématiquement référencées par les flèches A, B, C et D sur la figure 9a pour le poussoir 10, aucune protubérance 34 n'est prévue sur le poussoir 10. Par analogie, comme cela est représenté sur la figure 9b et comme cela à été évoqué en regard des figures 1 à 5, lorsque l'on souhaite limiter le nombre de directions de pivotement du poussoir 10 et du levier de commande 50 à trois, on dispose une protubérance 34 sur l'une des faces latérales du poussoir 10. Lorsque seulement deux directions de déplacement du levier de commande 50 (A, B) perpendiculaires entre elles doivent être autorisées, deux protubérances 34 sont prévues sur des faces latérales adjacentes du poussoir 10.

Lorsque seulement deux directions de pivotement opposées doivent être autorisées pour le poussoir 10, telles que par exemple les directions A, C, comme représentées sur la figure 9d, deux protubérances 34 sont prévues sur des faces latérales opposées du poussoir 10.

Enfin, comme cela est représenté sur la figure 9e, lorsqu'une seule direction de déplacement telle que la direction A doit être autorisée pour le poussoir 10, trois protubérances 34 sont prévues sur des faces latérales du poussoir 10.

On a schématiquement illustré sur les figures 10a, 10b et 10c trois types de paires de contacts électriques 200 susceptibles d'être utilisées dans le dispositif conforme à la présente invention.

Sur ces figures, on reconnaît un levier de commande 50 coopérant avec un poussoir 10 schématiquement représenté et adapté pour modifier, lors d'un basculement illustré par les flèches référencées 0, l'état des contacts électriques 200. Sur chacune de ces figures 10a, 10b et 10c on reconnaît un contact fixe 260 présentant un plot 261 et une lamelle flexible 262 possédant une première extrémité 263 fixe et une seconde extrémité munie d'un plot 264 en regard du plot 261 précité.

Le premier type de contact illustré par la figure 10a est identique aux couples 216, 217 précités. Le poussoir 10 lors du basculement 0 repousse le plot 264 contre le plot 261 per déformation élastique de la lamelle 262. Un tel contact est ouvert au repos et fermé lors d'un actionnement.

Dans le second type de contact représenté sur la figure 10b qui correspond à un contact fermé au repos et ouvert lors d'un actionnement, le poussoir 10 est adapté pour repousser élastiquement la lamelle 262 lors de l'actionnement, et éloigner le plot 262 du plot 261, ces derniers revenant en contact lorsque l'opérateur relâche le levier de commande 50, grâce au ressort 90 et à l'élasticité de la lamelle 262. Un tel type de contact est identique à la paire de contacts 216/219 représentée sur la figure 1.

Enfin, le troisième type de contact illustré sur la figure 10c correspond à une paire de contacts ouverte au repos et fermée lors de l'actionnement.

Dans ce troisième type de contact, la lamelle 262 et le poussoir 10 sont adaptés de telle sorte que au repos la lamelle 262 vienne en appui constant contre le poussoir 10 mais que celui-ci interdise la mise en contact des plots 261 et 264.

Par contre, lors de l'actionnement du levier de commande 50, pour pivoter le poussoir 10 à l'opposé de la lamelle 262, le poussoir 10 s'efface devant la lamelle 262 autorisant la mise en contact, par élasticité de la lamelle 262, des plots 261 et 264. Lorsque l'opérateur relâche le levier de commande 50, le ressort 90 ramène le levier en position de repos tel qu'illustré par exemple sur la figure 1 et le poussoir 10 déforme à nouveau élastiquement la lamelle 261 afin d'écarter les plots 261 et 264.

On notera que la paire de contacts illustrée sur la figure 10c peut être commandée simultanément à une paire de contacts disposée à l'opposé, de l'autre côté du poussoir, lors d'un basculement du poussoir en éloignement de la paire de contacts première citée.

On notera par ailleurs qu'il est important de réaliser le boîtier, et en particulier l'ergot 162, ainsi que le poussoir 10 en un matériau résistant à l'usure.

La Demanderesse a ainsi déterminé que de façon avantageuse, un boîtier réalisé en polymère du type polyamide et un poussoir en polymère du type polyacétal donnaient pleinement satisfaction, les lamelles 216 à 220 formant les contacts électriques étant quant à elles réalisées en un alliage, tel que du laiton revêtu d'un composé à base d'argent, le tourillon 52 étant avantageusement réalisé sous forme d'une goupille en acier.

Bien entendu, les divers éléments du commutateur conforme à la présente invention sont susceptibles d'être l'objet de diverses modifications, en particulier en ce qui concerne le corps 150 et le couvercle 110.

Selon le mode de réalisaton représenté sur les figures, le couvercle 110 qui se compose d'une façon générale d'un voile sensiblement parallèle au fond 152 est accroché sur une structure prévue sur le bord libre supérieur de la paroi avant 154 en saillie en direction de la paroi arrière 153. Le couvercle 110 ainsi accroché sur la paroi avant 154 est de plus immobilisé sur le corps 150 grâce à deux rivets 160, 161 engagés dans des orifices correspondants traversant le couvercle 110 et les nervures 163, 164 comme cela est représenté sur la figure 3. Bien entendu d'autres modes de fixation sont envisageables.

L'homme de l'art appréciera en particulier que les nombreux logements 172 à 175, 182, 183, 176, 177 et 171 prévus dans le boîtier permettent d'adapter la structure des lamelles supportées dans le boîtier à de nombreuses applications.

Par ailleurs, pour passer d'un mode de réalisation à l'autre il suffit de choisir un poussoir 10 approprié (muni ou non de protubérances 34), le boîtier 100, le levier 50 et le ressort 90 restant quant à eux identiques.

De préférence, des oeillets 184 et 185 sont prévus sur le boîtier 100 pour la fixation de celui-ci.

## Revendications

1. Commutateur électrique en particuleir pour vehicule automibile, du type comportant un boîtier creux (100) présentant une ouverture (157) dans l'une première de ses parois et un levier de commande (50) muni d'une tourillon (52) transversal à son axe longitudinal (A-A), pénétrant dans le boîtier par ladite ouverture, porté à pivotement sur le boîtier, et adapté pour modifier l'état de couples de contacts électriques (200) logés dans le boîtier, lors de son déplacement, caractérisé par le fait que:
- le tourillon (52) repse contre la surface interne (159) de la première paroi (153) du boîtier, et le levier de commande est engagé au niveau de son extrémité interne au boîtier dans
- un poussoir (10) en forme de douille, présentant, au niveau de sa face opposée au levier,
. d'une part une incurvation centrale (16),
. d'autre part quatre saillies (17-20) régulièrement réparties angulairement sur la périphérie de l'incurvation,
ledit poussoir étant sollicité en éloignement du levier (50) par
- un organe élastique (90) intercalé entre le poussoir (10) et le tourillon (52), de telle sorte que le poussoir repose contre
- une seconde paroi (154) du boîtier, opposée à la première, qui présente sur sa face interne un ergot (162) engagé en position de repos dans l'incurvation (16) du poussoir et de largeur inférieure à l'écartement existant entre deux saillies (17-20) adjacentes du poussoir, tandis que
- les contacts électriques (200) sont supportés à l'intérieur du boîtier au voisinage de la périphérie du poussoir (10) de telle sorte que leur état soit modifié lors d'un déplacement du poussoir induit par le pivotement du levier de commande (50).

2. Commutateur électrique selon la revendication 1, caractérisé pas le fait que le poussoir (10) est délimité par une enveloppe munie sur sa périphérie (30-33) normale à la face présentant l'incurvation (16), et au voisinage de cette face, de protubérances (34) destinées à venir en appui contre le boîtier afin d'interdire un pivotement du levier de commande (50) dans certaines directions.

3. Commutateur électrique selon l'une des revendications 1 ou 2, caractérisé par le fait que chaque couple de contacts électriques (200) comprend un contact fixe (222, 223, 235) et un contact (226, 233, 241) mobile lors du pivotement du levier (50), constitué d'une lamelle électriquement conductrice, souple et élastique.

4. Commutateur électrique selon la revendication 3, caractérisé par le fait que les lamelles (216-220) électriquement conductrices sont immobilisées à l'intérieur du boîtier par insertion dans des logements (171-177) prévus sur les faces internes du boîtier.

5. Commutateur électrique selon l'une des revendications 3 et 4, caractérisé par le fait que au repos une portion (225, 231, 238) des lamelles (217, 218, 219) formant un contact mobile s'étend sensiblement parallèlement à une face latérale (30-33) du poussoir.

6. Commutateur électrique selon l'une des revendications 1 à 5, caractérisé par le fait que le boîtier est formé de deux parties (110, 150) en matière synthétique moulée, assemblée entre elles.

7. Commutateur électrique selon l'une des revendications 1 à 6, caractérisé par le fait que le boîtier (110, 150) est en polymère du type polyamide.

8. Commutateur électrique selon l'une des revendications 1 à 7, caractérisé par le fait que le poussoir (10) est en polymère du type polyacétal.

9. Commutateur électrique selon l'une des revendications 1 à 8, caractérisé par le fait que le commutateur comprend des couples (200) de contacts électriques fermés au repos.

10. Commutateur électrique selon l'une des revendications 1 à 9, caractérisé par le fait que le commutateur comprend des couples (200) de contacts électriques ouverts au repos.

11. Commutateur électrique selon l'une des revendications 1 à 10, caractérisé par le fait que deux couples de contacts électriques (261, 264) disposés respectivement de part et d'autre du poussoir (10) sont adaptés pour être commandés simultanément lors du déplacement de celui-ci

**Patentansprüche**

1. Elektrischer Schalter, insbesondere für automobile Fahrzeuge, von einem Typ, der ein hohles Gehäuse (100) umfaßt, das eine Öffnung (157) in seiner einen ersten Zwischenwand und einen Steuerhebel (50) umfaßt, welcher mit einem quer zu seiner Längsachse (A-A) angeordneten Drehzapfen befestigt ist, durch die genannte Öffnung in das Gehäuse eindringt, drehbar in dem Gehäuse getragen wird und angepaßt ist, um den Zustand der elektrischen Kontaktpaare (200), die in dem Gehäuse liegen, infolge seiner Verschiebung, zu verändern, dadurch gekennzeichnet, daß
- der Drehzapfen gegen eine innere Oberfläche (159) der ersten Zwischenwand (153) des Gehäuses anliegt und der Steuerhebel (50) auf der Höhe seines Endes innerhalb des Gehäuses
- mit einer Druckvorrichtung (10) zum Eingriff kommt, die in Form einer Hülse gebildet ist, die, auf der Höhe ihrer Fläche, die dem Hebel gegenüberliegt,
. einerseits eine zentrale Innenkrümmung (16) aufweist und
. andererseits Ansätze (17-20) aufweist, die regelmäßig winkelmäßig über dem Umfang der Innenkrümmung verteilt sind,
wobei die besagte Druckvorrichtung bei der Auslenkung des Hebels (50) beansprucht wird, durch
- ein elastisches Organ (90), das zwischen der Druckvorrichtung (10) und dem Drehzapfen (52) derartig angeordnet ist, daß die Druckvorrichtung anliegt an
- einer zweiten Wand (154) des Gehäuses, die der ersten gegenüber angeordnet ist und auf ihrer inneren Seite einen Nocken (162) aufweist, der in seiner Ruhestellung mit einer Innenkrümmung (16) der Druckvorrichtung zum Eingriff kommt und eine Größe hat, die kleiner als der Abstand zwischen zwei Ansätzen (17, 20) ist, welche an die Druckvorrichtung angrenzen, so daß
- die elektrischen Kontakte (200) im Inneren des Gehäuses in der Nähe des Umfangs der Druckvorrichtung (10) derartig gehaltert sind, daß ihr Zustand infolge einer Verschiebung der Druckvorrichtung, die durch die Schwenkbewegung des Steuerhebels (50) induziert wird, geändert werden sollte.

2. Elektrischer Schalter nach Anspruch 1, dadurch gekennzeichnet, daß die Druckvorrichtung (10) durch eine Wandung begrenzt ist, die an ihrem Umfang (30-33), der senkrecht zu der Fläche befestigt ist, welche die Innenkrümmung (16) bildet, und nahe der genannten Fläche, Vorsprünge (34) aufweist, die bestimmt sind, gegen das Gehäuse anzuliegen, um eine Verschwenkung des Steuerhebels (50) in bestimmte Richtungen zu verhindern.

3. Elektrischer Schalter nach einem der Ansprüche 1 oder 2, dadurch gekennzeichnet, daß jedes elektrische Kontaktpaar (200) einen festen (222, 223, 235) und einen durch Schwenkung des Hebels (50) beweglichen Kontakt (226, 233, 241) umfaßt, der aus einer elektrisch leitenden, biegsamen und elastischen Lamelle besteht.

4. Elektrischer Schalter nach Anspruch 3, dadurch gekennzeichnet, daß die elektrisch leitenden Lamellen (216-220) im Inneren des Gehäuses durch Einfügung in die Lagerungen (171-177) befestigt sind, welche an den inneren Flächen des Gehäuses vorgesehen sind.

5. Elektrischer Schalter nach einem der Ansprüche 3 oder 4, dadurch gekennzeichnet, daß im Ruhezustand ein Abschnitt (225, 231, 238) der Lamellen (217, 218, 219) einen beweglichen Kontakt bildet, der sich im wesentlichen parallel zu einer seitlichen Fläche (30-33) der Druckvorrichtung erstreckt.

6. Elektrischer Schalter nach einem der Ansprüche 1 bis 5, dadurch gekennzeichnet, daß das Gehäuse aus zwei Teilen (110, 150) aus gegossenem Kunststoff besteht, die miteinander zusammengesetzt sind.

7. Elektrischer Schalter nach einem der Ansprüche 1 bis 6, dadurch gekennzeichnet, daß das Gehäuse (110, 150) aus einem Polymer von der Art des Polyamid ist.

8. Elektrischer Schalter nach einem der Ansprüche 1 bis 7, dadurch gekennzeichnet, daß die Druckvorrichtung (10) aus einem Polymer von der Art des Polyacetal besteht.

9. Elektrischer Schalter nach einem der Ansprüche 1 bis 8, dadurch gekennzeichnet, daß der Schalter elektrische Kontaktpaare (200) enthält, die im Ruhezustand geschlossen sind.

10. Elektrischer Schalter nach einem der Ansprüche 1 bis 9, dadurch gekennzeichnet, daß der Schalter elektrischen Kontaktpaare (200) enthält, die im Ruhezustand geöffnet sind.

11. Elektrischer Schalter nach einem der Ansprüche 1 bis 10, dadurch gekennzeichnet, daß zwei elektrische Kontaktpaare (261, 264), die auf der einen bzw. auf der anderen Seite der Druckvorrichtung (10) angeordnet sind, ausgebildet sind, um durch ihre Verschiebung gleichzeitig gesteuert zu werden.

**Claims**

1. Electrical switch, in particular for a motor-vehicle, of the type comprising a hollow casing (100) having an opening (157) in the first of its walls and a control lever (50) provided with a journal (52) arranged transversely with respect to its longitudinal axis (A-A), penetrating the casing through the said opening, supported pivotally on the casing and adapted to modify the state of pairs of electrical contacts (200) housed in the casing, at the time of its movement, characterised by the fact that:
- the journal (52) rests against the inner surface (159) of the first wall (153) of the casing and the control lever is engaged at the level of its inner end in the casing in

- a push-rod (10) in the form of a socket, comprising, at the level of its face opposite the lever,

. on the one hand a central concave portion (16),

. on the other hand four projections (17-20) distributed uniformly in an angular manner over the periphery of the concave portion,

the said push-rod being biased away from the lever (50) by

- a spring member (90) interposed between the push-rod (10) and the journal (52), so that the push-rod rests against

- a second wall (154) of the casing, opposite the first, which comprises on its inner face a lug (162) engaged in the inoperative position in the concave portion (16) of the push-rod and of a width less than the spacing existing between two adjacent projections (17-20) of the push-rod, whereas

- the electrical contacts (200) are supported inside the casing in the vicinity of the periphery of the push-rod (10) so that their state is modified at the time of a movement of the push-rod induced by the pivoting of the control lever (50).

2. Electrical switch according to Claim I, characterised by the fact that the push-rod (10) is defined by a case provided on its periphery (30-33) perpendicular to the face comprising the concave portion (16), and in the vicinity of this face, with projections (34) intended to bear against the casing in order to prevent pivoting of the control lever (50) in certain directions.

3. Electrical switch according to one of Claims 1 or 2, characterised by the fact that each pair of electrical contacts (200) comprises a fixed contact (222, 223, 235) and a contact (226, 233, 241) which is able to move at the time of pivoting of the lever (50), constituted by an electrically conducting, flexible and elastic strip.

4. Electrical switch according to Claim 3, characterised by the fact that the electrically conducting strips (216-220) are immobilised inside the casing by insertion in housings (171-177) provided on the inner faces of the casing.

5. Electrical switch according to one of Claims 3 and 4, characterised by the fact that when inoperative, a portion (225, 231, 238) of the strips (217, 218, 219) forming a movable contact extends substantially parallel to a side face (30-33) of the push-rod.

6. Electrical switch according to one of Claims 1 to 5, characterised by the fact that the casing is formed of two parts (110, 150) of moulded synthetic material, which are fitted together.

7. Electrical switch according to one of Claims 1 to 6, characterised by the fact that the casing (110, 150) is made of a polymer of the polyamide type.

8. Electrical switch according to one of Claims 1 to 7, characterised by the fact that the push-rod (10) is made from a polymer of the polyacetal type.

9. Electrical switch according to one of Claims 1 to 8, characterised by the fact that the switch comprises pairs (200) of electrical contacts which are closed when inoperative.

10. Electrical switch according to one of Claims 1 to 9, characterised by the fact that the switch comprises pairs (200) of electrical contacts which are open when inoperative.

11. Electrical switch according to one of Claims 1 to 10, characterised by the fact that two pairs of electrical contacts (261, 264) arranged respectively on either side of the push-rod (10), are adapted to be controlled simultaneously at the time of movement of the latter.

FIG_1

# FIG. 2

0 140 754

0 140 754

FIG.3

FIG.5

5

FIG_4

FIG_6

FIG. 7

FIG_8

FIG_9a

FIG_9b

FIG_9c

FIG_9d

FIG_9e

FIG_10a

FIG_10b

FIG_10c